# EUROPEAN PATENT APPLICATION

(11) **EP 3 330 904 A1**
(43) Date of publication of application: **06.06.2018**
(21) Application number: 17204374.7
(22) Date of filing: 29.11.2017
(51) Int. Cl.: G06Q 10/00, G06Q 10/10

(54) **MAINTENANCE MANAGING PROGRAM, MAINTENANCE MANAGING DEVICE, MAINTENANCE MANAGING METHOD, AND GRAPHICAL USER INTERFACE**

(30) Priority: 30.11.2016 JP 2016232654
(71) Applicant: Mimaki Engineering Co., Ltd., Tomi-City, Nagano 389-0512 (JP)
(72) Inventor: HARAYAMA, Kenji, Tomi-city, Nagano 389-0512 (JP)
(74) Representative: Horn Kleimann Waitzhofer Patentanwälte PartG mbB

(57) **Abstract**

A maintenance managing program, a maintenance managing device, a maintenance managing method, and a graphical user interface that can increase a possibility by which a maintenance of an inkjet printer is appropriately performed by a user. A printer controller includes a maintenance prompting section for prompting a user to perform a maintenance when an appropriate performing time as an appropriate performing time of the maintenance of a 3D printer 20 has come, and a display controlling section for controlling a display of a display device, and the display controlling section displays a "once a day" display area 151b, a "once a week" display area 151c, and a "once every half year" display area 151d, which indicate appropriate performing intervals of maintenances, and previous performing time display areas 153b, 154b, 155b, 156b and 157b, which indicate previous performing times of the maintenances, on the display device.

## Description

### TECHNICAL FIELD

The disclosure herein relates to a maintenance managing program, a maintenance managing device, a maintenance managing method, and a graphical user interface for managing maintenance of an inkjet printer.

### DESCRIPTION OF THE BACKGROUND ART

Conventionally, there is a known method in which shaping data, which a 3D printer as an inkjet printer is executable, is generated based on 3D model data, after which a three-dimensional object is formed by the 3D printer according to the generated shaping data (for example, see JP 2015-193184 A).

### SUMMARY

However, in such a conventional technique, there is a problem that a maintenance is not appropriately performed on the 3D printer.

Thus, the disclosure herein aims to provide a maintenance managing program, a maintenance managing device, a maintenance managing method, and a graphical user interface which can increase a possibility by which a maintenance of an inkjet printer is appropriately performed by a user.

A maintenance managing program of the present disclosure includes instructions for causing a computer to realize: a maintenance prompting section configured to prompt a user to perform a maintenance in a case where an appropriate performing time, which is an appropriate time for performing the maintenance of an inkjet printer, has come; and a display controlling section configured to control a display of a display device, wherein the display controlling section is configured to display an appropriate performing interval of the maintenance (i.e. an appropriate interval for performing the maintenance), and at least one of a previous performing time of the maintenance and a time obtained by adding the performing interval to the previous performing time on the display device.

According to this configuration, the computer executing the maintenance managing program of the present disclosure displays the appropriate performing interval of the maintenance of the inkjet printer, and at least one of the previous performing time of the maintenance and the time obtained by adding the appropriate performing interval of the maintenance to the previous performing time of the maintenance on the display device, and as such, the user can be acknowledged of the specific appropriate performing time of the maintenance. Accordingly, the computer executing the maintenance managing program of the present disclosure can increase a possibility by which the maintenance of the inkjet printer is appropriately performed by the user.

The maintenance managing program of the present disclosure may further include instructions for causing the computer to realize: a user schedule acquiring section configured to acquire a schedule of the user, wherein the maintenance prompting section may use a specific time as the appropriate performing time, the specific time being on or before the time obtained by adding the performing interval to the previous performing time and being a time when the user can perform the maintenance according to the schedule acquired by the user schedule acquiring section.

According to this configuration, since the computer executing the maintenance managing program of the present disclosure prompts the user to perform the maintenance when the appropriate performing time has come, which is on or before the time obtained by adding the appropriate performing interval of the maintenance to the previous performing time of the maintenance of the inkjet printer and is the time when the user can perform the maintenance, the possibility that the maintenance is performed by the user before elapsing the time obtained by adding the appropriate performing interval of the maintenance to the previous performing time of the maintenance can be increased.

A maintenance managing program of the present disclosure includes instructions for causing a computer to realize: a maintenance prompting section configured to prompt a user to perform a maintenance in a case where an appropriate performing time as an appropriate performing time of the maintenance of an inkjet printer has come; and a user schedule acquiring section configured to acquire a schedule of the user, wherein the maintenance prompting section uses a specific time as the appropriate performing time, the specific time being on or before a time obtained by adding an appropriate performing interval of the maintenance to a previous performing time and being a time when the user can perform the maintenance according to the schedule acquired by the user schedule acquiring section.

According to this configuration, since the computer executing the maintenance managing program of the present disclosure prompts the user to perform the maintenance when the appropriate performing time has come, which is on or before the time obtained by adding the appropriate performing interval of the maintenance to the previous performing time of the maintenance of the inkjet printer and is the time when the user can perform the maintenance, the possibility that the maintenance is performed by the user before elapsing the time obtained by adding the appropriate performing interval of the maintenance to the previous performing time of the maintenance can be increased.

A maintenance managing device of the present disclosure includes: a maintenance prompting section configured to prompt a user to perform a maintenance in a case where an appropriate performing time, which is an appropriate time for performing the maintenance of an inkjet printer, has come; and a display controlling section configured to control a display of a display device, wherein the display controlling section is configured to display an appropriate performing interval of the maintenance, and at least one of a previous performing time of the maintenance and a time obtained by adding the performing interval to the previous performing time on the display device.

According to this configuration, the maintenance managing device of the present disclosure displays the appropriate performing interval of the maintenance of an inkjet printer, and at least one of the previous performing time of the maintenance and the time obtained by adding the appropriate performing interval of the maintenance to the previous performing time of the maintenance on the display device, and as such, the user can be acknowledged of the specific appropriate performing time of the maintenance. Accordingly, the maintenance managing device of the present disclosure can increase the possibility by which the maintenance of the inkjet printer is appropriately performed by the user.

A maintenance managing device of the present disclosure includes: a maintenance prompting section configured to prompt a user to perform a maintenance in a case where an appropriate performing time as an appropriate performing time of the maintenance of an inkjet printer has come; and a user schedule acquiring section configured to acquire a schedule of the user, wherein the maintenance prompting section uses a specific time as the appropriate performing time, the specific time being on or before a time obtained by adding an appropriate performing interval of the maintenance to a previous performing time and being a time when the user can perform the maintenance according to the schedule acquired by the user schedule acquiring section.

According to this configuration, since the maintenance managing device of the present disclosure prompts the user to perform the maintenance when the appropriate performing time has come, which is on or before the time obtained by adding the appropriate performing interval of the maintenance to the previous performing time of the maintenance of the inkjet printer and is the time when the user can perform the maintenance, the possibility that the maintenance is performed by the user before elapsing the time obtained by adding the appropriate performing interval of the maintenance to the previous performing time of the maintenance can be increased.

A maintenance managing method of the present disclosure includes: a maintenance prompting step of prompting a user to perform a maintenance in a case where an appropriate performing time, which is an appropriate time for performing the maintenance of an inkjet printer, has come; and a display controlling step of controlling a display of a display device, wherein the display controlling step is a step of displaying an appropriate performing interval of the maintenance, and at least one of a previous performing time of the maintenance and a time obtained by adding the appropriate performing interval to the previous performing time on the display device.

According to this configuration, the maintenance managing method of the present disclosure displays the appropriate performing interval of the maintenance of the inkjet printer, and at least one of the previous performing time of the maintenance and the time obtained by adding the appropriate performing interval of the maintenance to the previous performing time of the maintenance on the display device, and as such, the user can be acknowledged of the specific appropriate performing time of the maintenance. Accordingly, the maintenance managing method of the present disclosure can increase the possibility by which the maintenance of the inkjet printer is appropriately performed by the user.

A maintenance managing method of the present disclosure includes: a maintenance prompting step of prompting a user to perform a maintenance in a case where an appropriate performing time as an appropriate performing time of the maintenance of an inkjet printer has come; and a user schedule acquiring step of acquiring a schedule of the user, wherein the maintenance prompting step is a step which uses a specific time as the appropriate performing time, the specific time being on or before a time obtained by adding an appropriate performing interval of the maintenance to a previous performing time and being a time when the user can perform the maintenance according to the schedule acquired by the user schedule acquiring step.

According to this configuration, since the maintenance managing method of the present disclosure prompts the user to perform the maintenance when the appropriate performing time has come, which is on or before the time obtained by adding the appropriate performing interval of the maintenance to the previous performing time of the maintenance of the inkjet printer and is the time when the user can perform the maintenance, the possibility that the maintenance is performed by the user before elapsing the time obtained by adding the appropriate performing interval of the maintenance to the previous performing time of the maintenance can be increased.

A graphical user interface of the present disclosure includes: a performing interval display area for indicating an appropriate performing interval of a maintenance of an inkjet printer; and a performing time display area for displaying at least one of a previous performing time of the maintenance and a time obtained by adding the performing interval to the previous performing time.

According to this configuration, the graphical user interface of the present disclosure displays the appropriate performing interval of the maintenance of the inkjet printer, and at least one of the previous performing time of the maintenance and the time obtained by adding the appropriate performing interval of the maintenance to the previous performing time of the maintenance on the display device, and as such, the user can be acknowledged of the specific appropriate performing time of the maintenance. Accordingly, the graphical user interface of the present disclosure can increase the possibility by which the maintenance of the inkjet printer is appropriately performed by the user.

The maintenance managing programs, the maintenance managing devices, the maintenance managing methods, and the graphical user interface of the present disclosure can increase the possibility by which the maintenance of the inkjet printer is appropriately performed by the user.

### BRIEF DESCRIPTION OF THE DRAWINGS

FIG. 1 is a block diagram of a three-dimensional shaping system of an embodiment of the present disclosure.
FIG. 2 is a front view diagram of a 3D printer shown in FIG. 1.
FIG. 3 is a block diagram of the 3D printer shown in FIG. 1.
FIG. 4 is a block diagram of a printer controller shown in FIG. 1.
FIG. 5 is a diagram showing an example of a graphical user interface displayed on a display device shown in FIG. 4.
FIG. 6 is a diagram showing an example of the graphical user interface shown in FIG. 5, for a case where a maintenance-related information display area is being displayed.
FIG. 7 is a diagram showing an example of the graphical user interface shown in FIG. 6, for a case where a wizard display area is being displayed in the maintenance-related information display area.
FIG. 8 is an operational flow chart of the printer controller shown in FIG. 4, for a case of prompting a user to perform maintenance.
FIG. 9 is a diagram showing an example of the graphical user interface shown in FIG. 6, for a case where performance of the maintenance is to be prompted.
FIG. 10 is a diagram showing an example of the graphical user interface shown in FIG. 5, for a case where a warning image is displayed in a maintenance tab when a job display area is being displayed.

### DETAILED DESCRIPTION OF EMBODIMENTS

Hereinbelow, an embodiment of the present disclosure will be described with reference to the drawings.

Firstly, a configuration of a three-dimensional shaping system according to the present embodiment will be described.

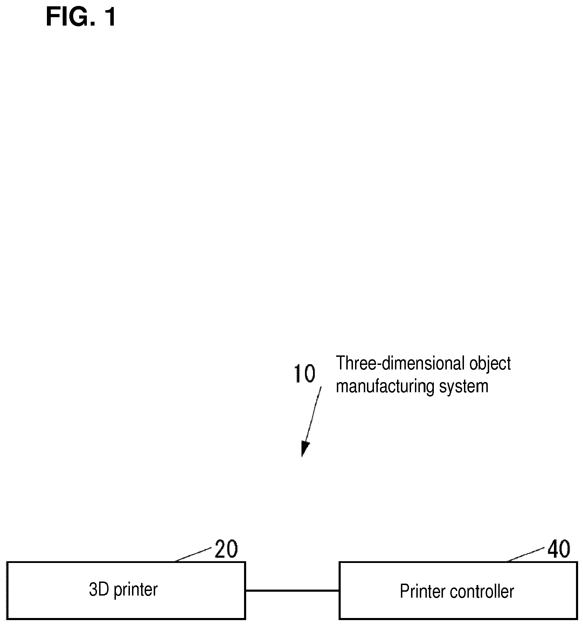

FIG. 1 is a block diagram of a three-dimensional shaping system 10 according to the present embodiment.

As shown in FIG. 1, the three-dimensional shaping system 10 is provided with a 3D printer 20 being an inkjet printer for shaping a three-dimensional object using ink printing, and a printer controller 40 configured to control the 3D printer 20. The printer controller 40 is a device that generates shaping data executable by the 3D printer 20 based on 3D model data in an OBJ format, 3MF format, STL format, for example.

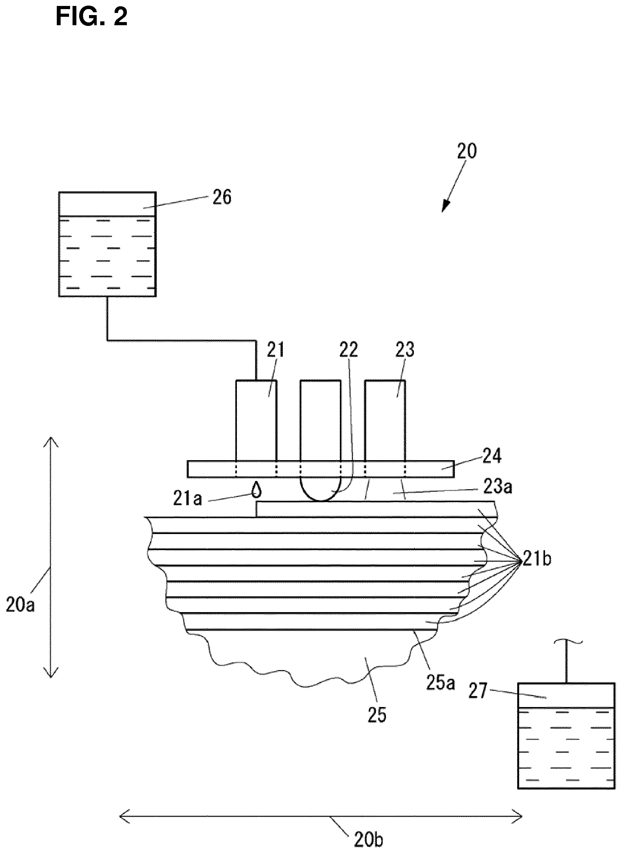

FIG. 2 is a front view diagram of the 3D printer 20.

As shown in FIG. 2, the 3D printer 20 includes a carriage 24 installed with a plurality of inkjet heads 21 for discharging ultraviolet curing ink (hereafter termed "UV ink") 21a downward along a vertical direction 20a, a flattening roller 22, being a flattening member for contacting and flattening a layer 21b of the UV ink 21a ejected and formed by the inkjet heads 21, and an ultraviolet light irradiator 23 for irradiating ultraviolet light 23a to the layer 21b of the UV ink 21a.

It should be noted that in FIG. 2, only one inkjet head 21 is depicted. However, in reality, the 3D printer 20 is provided with the inkjet heads 21 for respective types of the UV ink 21a.

As the UV ink 21a, for example, there exist shaping ink, which is to be a material of the three-dimensional object, and support ink, which is to be a material of a supporting portion that supports the three-dimensional object for forming the three-dimensional object of a desired shape.

As the shaping ink, for example, there exist white modeling ink, which is to be a material of a base portion of the three-dimensional object, color ink, which is for decorating a surface portion of the three-dimensional object by being arranged on an outer side of the modeling ink of the three-dimensional object, and clear ink for decorating the surface portion of the three-dimensional object by being arranged on an outer side of the modeling ink or the color ink of the three-dimensional object. As the color ink, for example, there exist cyan ink, magenta ink, yellow ink, and black ink.

The support ink is ink that can easily be removed by specific types of liquid, such as water for example. In the 3D printer 20, the supporting portion is formed at a lower side along the vertical direction 20a and along a horizontal direction with respect to the three-dimensional object. For example, in a case where the three-dimensional object is provided with an over-hanging portion, the supporting portion is formed on a lower side of the over-hanging portion along the vertical direction 20a to support the over-hanging portion.

The 3D printer 20 is provided with a stage 25 having a support surface 25a that is for supporting the three-dimensional object and the supporting portion, which are formed of the UV ink 21a, ejected by the inkjet heads 21 and cured by the ultraviolet light 23a from the ultraviolet light irradiator 23. The support surface 25a extends in the horizontal direction intersecting the vertical direction 20a perpendicularly.

One of the carriage 24 and the stage 25 is capable of relative movement with respect to the other thereof.

For example, the carriage 24 is capable of relative movement with respect to the stage 25 in a main scanning direction 20b by being movably supported by a mechanism that is not shown along the main scanning direction 20b within the horizontal direction. It should be noted that hereinbelow, an example will be given in which the carriage 24 moves relatively in the main scanning direction 20b with respect to the stage 25 by moving in the main scanning direction 20b, however, the stage 25 may move relatively in the main scanning direction 20b with respect to the carriage 24 by moving in the main scanning direction 20b, or one of the carriage 24 and the stage 25 may move relatively with respect to the other thereof in the main scanning direction 20b by allowing both of the carriage 24 and the stage 25 to move in the main scanning direction 20b.

Further, the carriage 24 is capable of relative movement in a sub scanning direction with respect to the stage 25 by being movably supported by a mechanism that is not shown along the sub scanning direction, which intersects the main scanning direction 20b perpendicularly, within the horizontal direction. It should be noted that hereinbelow, an example will be given in which the carriage 24 moves relatively in the sub scanning direction with respect to the stage 25 by moving in the sub scanning direction, however, the stage 25 may move relatively in the sub scanning direction with respect to the carriage 24 by moving in the sub scanning direction, and one of the carriage 24 and the stage 25 may move relatively with respect to the other thereof in the sub scanning direction by allowing both of the carriage 24 and the stage 25 to move in the sub scanning direction.

One of the carriage 24 and the stage 25 is capable of relative movement with respect to the other thereof in the vertical direction 20a. For example, the stage 25 can move relatively in the vertical direction 20a with respect to the carriage 24 by being movably supported by a mechanism that is not shown along the vertical direction 20a. It should be noted that hereinbelow, an example will be given in which the stage 25 moves relatively in the vertical direction 20a with respect to the carriage 24 by moving in the vertical direction 20a, however, the carriage 24 may move relatively in the vertical direction 20a with respect to the stage 25 by moving in the vertical direction 20a, and one of the carriage 24 and the stage 25 may move relatively with respect to the other thereof in the vertical direction 20a by allowing both of the carriage 24 and the stage 25 to move in the vertical direction 20a.

The 3D printer 20 includes an ink tank 26 storing the UV ink 21a to be supplied to the inkjet heads 21, and a discarded ink tank 27 for storing the UV ink 21a that is discarded when shaping (printing) is performed, such as the UV ink 21a that was scraped off from the layer 21b by the flattening roller 22 to flatten the layer 21b formed by the shaping ink and the support ink, and the UV ink 21a that was ejected by maintenance of the inkjet heads 21 or the like.

It should be noted that in FIG. 2, only one ink tank 26 is depicted. However, in actuality, the 3D printer 20 includes ink tanks 26 for respective types of the UV ink 21a.

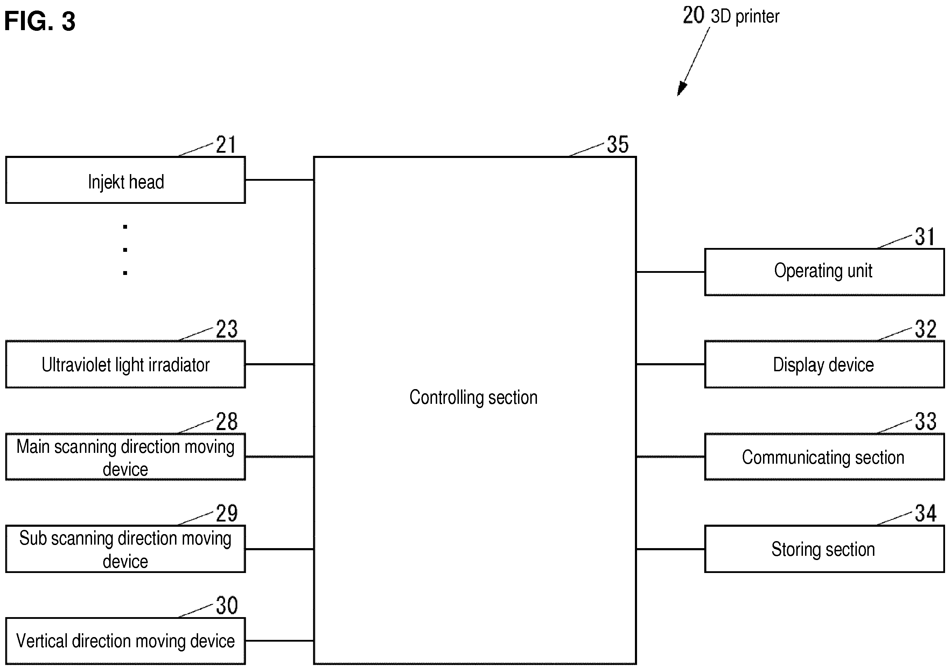

FIG. 3 is a block diagram of the 3D printer 20.

As shown in FIG. 3, the 3D printer 20 includes a main scanning direction moving device 28 configured to move the carriage 24 (see FIG. 2) in the main scanning direction 20b (see FIG. 2), a sub scanning direction moving device 29 configured to move the carriage 24 in the sub scanning direction, a vertical direction moving device 30 configured to move the stage 25 (see FIG. 2) in the vertical direction 20a (see FIG. 2), an operating unit 31 being an input device such as buttons to which various operations are to be inputted, a display device 32 being a display device such as an LCD (Liquid Crystal Display) for displaying various types of information, a communicating section 33 being a communication device for communicating with an external device via a network such as a LAN (Local Area Network) or without intervening a network, using wired or wireless connections, a storing section 34 being a nonvolatile storage device such as a semiconductor memory or an HDD (Hard Disk Drive) storing various types of information, and a controlling section 35 configured to control an entirety of the 3D printer 20.

The controlling section 35 is provided with a CPU (Central Processing Unit), a ROM (Read Only Memory) that stores programs and various types of data in advance, and a RAM (Random Access Memory) used as a working area for the CPU, for example. The CPU is configured to execute the programs stored in the ROM or the storing section 34.

The controlling section 35 controls the inkjet heads 21, the ultraviolet light irradiator 23, the main scanning direction moving device 28, the sub scanning direction moving device 29, and the vertical direction moving device 30 according to shaping data inputted from the printer controller 40 (see FIG. 1) via the communicating section 33. Specifically, the controlling section 35 forms a layer 21b made of the shaping ink and the support ink and extending in the horizontal direction by using the inkjet heads 21 and the ultraviolet light irradiator 23, while moving the carriage 24 in the main scanning direction 20b by the main scanning direction moving device 28 each time when a position of the carriage 24 in the sub scanning direction with respect to the stage 25 is changed by the sub scanning direction moving device 29. Further, the controlling section 35 forms the three-dimensional object and the supporting portion on the stage 25 by stacking layers 21b made of the shaping ink and the support ink and extending in the horizontal direction atop one another in the vertical direction 20a by repeating the aforementioned operation each time a position of the stage 25 in the vertical direction 20a with respect to the carriage 24 is changed by the vertical direction moving device 30.

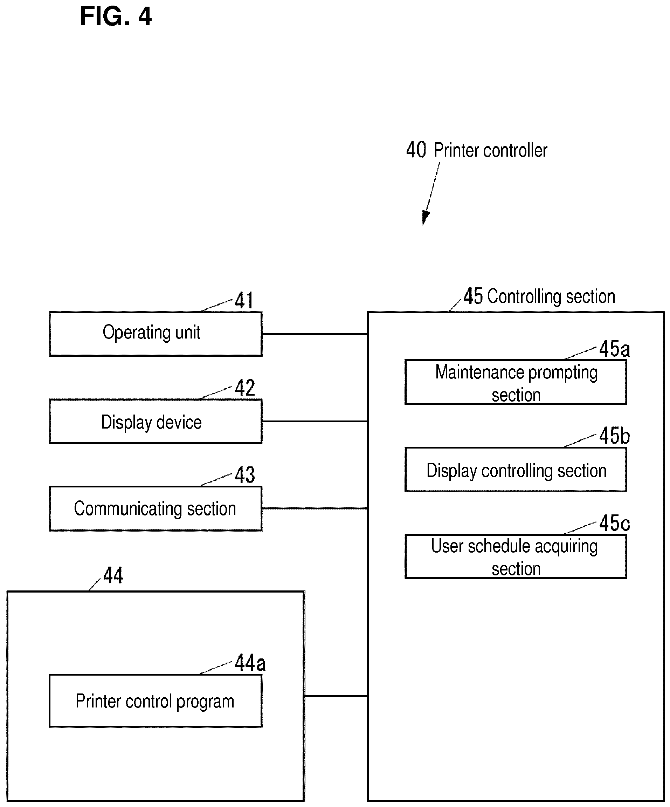

FIG. 4 is a block diagram of the printer controller 40.

As shown in FIG. 4, the printer controller 40 includes an operating unit 41 being an input device such as a keyboard and a mouse to which various operations are to be inputted, a display device 42 being a display device such as an LCD for displaying various types of information, a communicating section 43 being a communication device for communicating with an external device via a network such as a LAN or without intervening a network, using wired or wireless connections, a storing section 44 being a nonvolatile storage device such as a semiconductor memory or an HDD storing various types of information, and a controlling section 45 configured to control an entirety of the printer controller 40. The printer controller 40 is configured for example by a computer, such as a PC (Personal Computer).

The storing section 44 stores a printer control program 44a for managing the 3D printer 20 (see FIG. 3). The printer control program 44a may be installed in the printer controller 40 during manufacture of the printer controller 40, may be additionally installed to the printer controller 40 from an external storage medium such as a USB (Universal Serial Bus) memory, a CD (Compact Disk), or a DVD (Digital Versatile Disk), or may be additionally installed to the printer controller 40 from a network.

The controlling section 45 is provided with a CPU, a ROM that stores programs and various types of data in advance, and a RAM used as a working area for the CPU, for example. The CPU is configured to execute the programs stored in the ROM or the storing section 44.

The controlling section 45 realizes a maintenance prompting section 45a configured to prompt a user to perform maintenance when an appropriate performing time as an appropriate performing time of the maintenance of the 3D printer 20 is reached, a display controlling section 45b configured to control display on the display device 42, and a user schedule acquiring section 45c configured to acquire a schedule of the user by executing the printer control program 44a. Accordingly, the printer controller 40 and the printer control program 44a respectively configure a maintenance managing device and a maintenance managing program of the present disclosure.

Next, an operation of the printer controller 40 will be described.

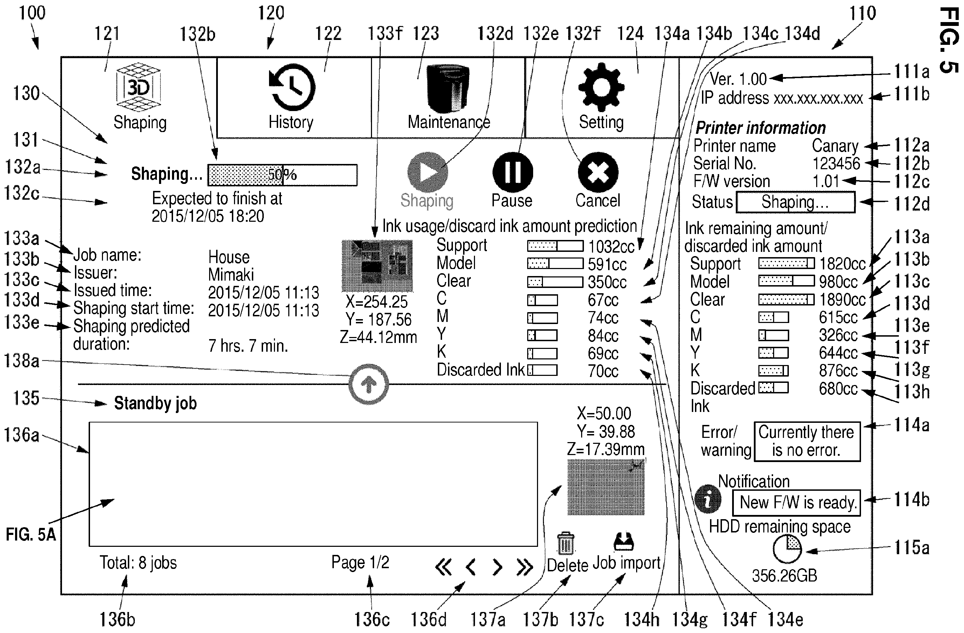

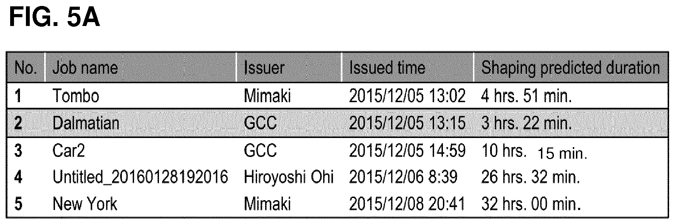

FIG. 5 is a diagram showing an example of a graphical user interface (hereafter termed "GUI") 100 displayed on the display device 42.

When the printer controller 40 is activated, the display controlling section 45b displays the GUI 100 shown in FIG. 5 on the display device 42.

As shown in FIG. 5, the GUI 100 includes a constant display area 110 where information of the 3D printer 20 and the printer controller 40 is constantly displayed, and a display switchable area 120 of which display contents are switched by a tab.

The constant display area 110 includes an application version display area 111a for indicating a version of the printer control program 44a, and an IP address display area 111b for indicating an IP (Internet Protocol) address of the printer controller 40.

The constant display area 110 includes a printer name display area 112a for indicating a name of the 3D printer 20, a serial number display area 112b for indicating a serial number of the 3D printer 20, an FW version display area 112c for indicating a version of a firm ware of the 3D printer 20, and a status display area 112d for indicating a status of the 3D printer 20, being one of "shaping", "standby", and "shaping not available".

The constant display area 110 includes a support ink remaining amount display area 113a for indicating a stored amount of the support ink in the ink tank 26 for the support ink, that is, a remaining amount thereof in a graph and in a numerical value. Similarly for the modeling ink, the clear ink, the cyan ink, the magenta ink, the yellow ink, and the black ink, the constant display area 110 includes a modeling ink remaining amount display area 113b, a clear ink remaining amount display area 113c, a cyan ink remaining amount display area 113d, a magenta ink remaining amount display area 113e, a yellow ink remaining amount display area 113f, and a black ink remaining amount display area 113g. Further, the constant display area 110 includes a discarded ink amount display area 113h for indicating a stored amount of the UV ink 21a in the discarded ink tank 27.

The graph of the support ink remaining amount display area 113a shows a total storable amount of the support ink in the ink tank 26 for the support ink by an overall rectangle, and the stored amount of the support ink in the ink tank 26 for the support ink is indicated by a rectangle on the left side as included in the overall rectangle. The same applies to the modeling ink remaining amount display area 113b, the clear ink remaining amount display area 113c, the cyan ink remaining amount display area 113d, the magenta ink remaining amount display area 113e, the yellow ink remaining amount display area 113f, the black ink remaining amount display area 113g, and the discarded ink amount display area 113h.

In the support ink remaining amount display area 113a, when the remaining amount of the support ink in the ink tank 26 for the support ink becomes below a certain amount, some sort of emphasized display is displayed, such as a letter string of "support" indicating the support ink, being the UV ink 21a, that is a target of the support ink remaining amount display area 113a, is displayed with emphasis. The same applies to the modeling ink remaining amount display area 113b, the clear ink remaining amount display area 113c, the cyan ink remaining amount display area 113d, the magenta ink remaining amount display area 113e, the yellow ink remaining amount display area 113f, and the black ink remaining amount display area 113g. Further, in the discarded ink amount display area 113h, some sort of emphasized display is displayed, such as a letter string of "discarded ink" being displayed with emphasis, when the stored amount of the UV ink 21a in the discarded ink tank 27 exceeds a certain amount.

The constant display area 110 includes an error/warning display area 114a for indicating an error or a warning that has been occurring during a recent period, and a notification display area 114b for notifying version update information and the like for updating versions of the firmware of the printer control program 44a and the 3D printer 20. The notification display area 114b displays an icon when there is version update information. Further, when this icon is clicked, the display controlling section 45b displays a version update screen on the display device 42 for updating the version of the firmware of the printer control program 44a or the 3D printer 20.

The constant display area 110 includes an HDD remaining space display area 115a for displaying a remaining space in a work folder of the storing section 44 in a graph. In the HDD remaining space display area 115a, some sort of emphasized display is displayed, such as a color of the graph changes, when the remaining space of the work folder of the storing section 44 becomes below a certain size.

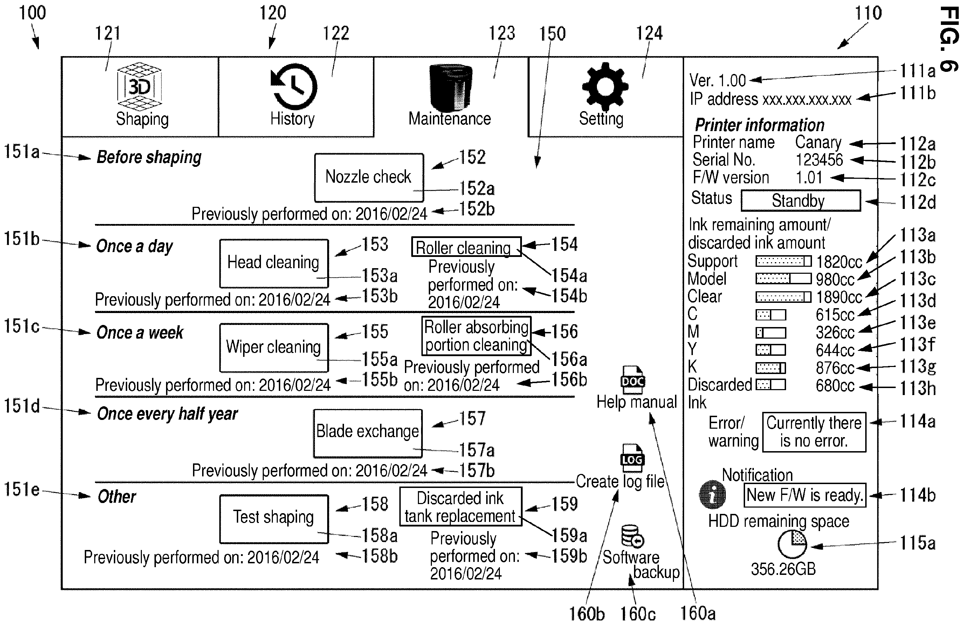

The display switchable area 120 includes a shaping tab 121 for switching displayed contents of the display switchable area 120 to the job display area 130 for displaying a print job being a current processing target by the 3D printer 20 (hereafter termed "current target job") and a print job that is on standby for the processing by the 3D printer 20 (hereafter termed "standby job"), a history tab 122 for switching the displayed contents of the display switchable area 120 to a history display area for displaying shaping results as a history, a maintenance tab 123 for switching the displayed contents of the display switchable area 120 to a maintenance-related information display area 150 (see FIG. 6) as described later for displaying information related to the maintenance of the 3D printer 20, and a setting tab 124 for switching the displayed contents of the display switchable area 120 to a display setting area for various types of settings, such as a display language setting for the GUI 100, a network setting for the printer controller 40, and the like.

It should be noted that the detailed description regarding a history display area and a setting display area will be omitted.

The job display area 130 includes a current target job display area 131 for indicating the current target job and a standby job display area 135 for indicating the standby job.

The current target job display area 131 includes a status display area 132a for indicating one of statuses "shaping", "standby", and "paused" as a status of the current target job, a progress display area 132b for indicating a degree of progress (%) of the shaping of the current target job by a progress bar, and a completion scheduled time display area 132c for indicating a completion scheduled time of the current target job. The display controlling section 45b can calculate the time predicted as necessary for the shaping of the current target job (hereafter termed "shaping predicted duration") based on the 3D model data of the current target job. Further, the display controlling section 45b can calculate the completion scheduled time of the current target job by adding the shaping predicted duration of the current target job to a start time of the shaping of the current target job.

The current target job display area 131 includes a shaping start button 132d for starting the shaping of the current target job, a pause button 132e for temporarily stopping the shaping of the current target job, and a cancel button 132f for canceling the shaping of the current target job. When the shaping start button 132d is operated, the shaping data generated based on the 3D model data of the current target job is sent to the 3D printer 20. The shaping start button 132d cannot be operated by being grayed out when there is no current target job, or when the status of the current target job is "shaping". The pause button 132e cannot be operated by being grayed out except during when the status of the current target job is "shaping". The cancel button 132f cannot be operated by being grayed out except during when the status of the current target job is "paused". When the cancel button 132f is operated, the current target job no longer becomes a current target job, and is included in the history.

The current target job display area 131 includes a job name display area 133a for indicating a name of the current target job, an issuer display area 133b for indicating an issuer of the current target job, an issued time display area 133c for indicating an issued time of the current target job, a shaping start time display area 133d for indicating the start time of the shaping of the current target job, a shaping predicted duration display area 133e for indicating the shaping predicted duration of the current target job, and a preview display area 133f for indicating a preview of the shaping of the current target job.

The preview indicated by the preview display area 133f is a preview for a case of observing the three-dimensional object to be shaped by the 3D printer 20 from a top side along the vertical direction 20a. Numerical values indicated below the preview indicated in the preview display area 133f indicate a size of the three-dimensional object to be shaped by the 3D printer 20. Here, X, Y, and Z respectively indicate the sub scanning direction, the main scanning direction 20b, and the vertical direction 20a.

The current target job display area 131 includes a support ink predicted usage display area 134a for indicating a usage of the support ink as predicted for the printing by the 3D printer 20 based on particular 3D model data in a graph and in numerical values. Similarly for the modeling ink, the clear ink, the cyan ink, the magenta ink, the yellow ink, and the black ink, the current target job display area 131 includes a modeling ink predicted usage display area 134b, a clear ink predicted usage display area 134c, a cyan ink predicted usage display area 134d, a magenta ink predicted usage display area 134e, a yellow ink predicted usage display area 134f, and a black ink predicted usage display area 134g. Further, the current target job display area 131 includes a discarded ink amount prediction display area 134h for indicating a discarded amount of the UV ink 21a to the discarded ink tank 27 as predicted for the printing by the 3D printer 20 based on the particular 3D model data.

The graph in the support ink predicted usage display area 134a indicates the total storable amount of the support ink in the ink tank 26 for the support ink by an overall rectangle, and the usage of the support ink from the ink tank 26 for the support ink as predicted for the printing by the 3D printer 20 based on the particular 3D model data is indicated by a rectangle on the left side as included in the overall rectangle. The same applies to the modeling ink predicted usage display area 134b, the clear ink predicted usage display area 134c, the cyan ink predicted usage display area 134d, the magenta ink predicted usage display area 134e, the yellow ink predicted usage display area 134f, and the black ink predicted usage display area 134g. The graph in the discarded ink amount prediction display area 134h indicates the total storable amount of the UV ink 21a in the discarded ink tank 27 by an overall rectangle, and the discarded amount of the UV ink 21a to the discarded ink tank 27 as predicted for the printing by the 3D printer 20 based on the particular 3D model data is indicated by a rectangle on the left side as included in the overall rectangle.

The standby job display area 135 includes a standby job list display area 136a for indicating standby jobs in a list. When a number of the standby jobs exceeds a maximum number displayable in a one-page worth list, the standby job list display area 136a is capable of displaying all of the standby jobs by its page being switched. In the standby job list display area 136a, a standby job can be selected by a row of the displayed standby job being clicked. In the standby job list display area 136a, a plurality of standby jobs cannot be selected simultaneously. Each of the standby jobs displayed in the standby job list display area 136a is associated with 3D model data and shaping data of that standby job, which are included in the 3D model data and the shaping data stored in the storing section 44.

The standby job display area 135 includes a total number display area 136b for indicating a total number of the standby jobs, a page number display area 136c for indicating a page number of the list displayed in the standby job list display area 136a, and a page changing button 136d for switching the page of the list displayed on the standby job list display area 136a. The page changing button 136d cannot be operated by being grayed out when the number of the standby jobs is equal to or less than the maximum number displayable in the one-page worth list.

The standby job display area 135 includes a preview display area 137a, which is similar to the preview display area 133f, for indicating a preview of the shaping of the standby job selected in the standby job list display area 136a, a delete button 137b for deleting the standby job selected in the standby job list display area 136a from the standby job list display area 136a, and a job import button 137c for adding a print job stored in an external storage medium such as a USB memory to the standby job list display area 136a as a standby job.

The standby job display area 135 includes a shifting button 138a for shifting the standby job selected in the standby job list display area 136a to a current target job. The standby job that had shifted to the current target job by the shifting button 138a being operated is deleted from the standby job list display area 136a.

FIG. 6 is a diagram showing an example of the GUI 100 for a case where the maintenance-related information display area 150 is being displayed.

As shown in FIG. 6, the maintenance-related information display area 150 includes a "before shaping" display area 151a for indicating that an appropriate timing for performing the maintenance of the 3D printer 20 (hereafter termed "appropriate performing timing") is "before shaping", a "once a day" display area 151b as a performing interval display area for indicating that the appropriate performing timing is "once a day", which is an appropriate interval for performing the maintenance of the 3D printer 20 (hereafter termed "appropriate performing interval"), a "once a week" display area 151c as a performing interval display area for indicating that the appropriate performing timing is "once a week", which is the appropriate performing interval, a "once every half year" display area 151d as a performing interval display area for indicating that the appropriate performing timing is "once every half year", which is the appropriate performing interval, and an "other timing" display area 151e for indicating that the appropriate performing timing is none of "before shaping", "once a day", "once a week", and "once every half year".

The maintenance-related information display area 150 includes a "nozzle check" related information display area 152 for indicating information related to "nozzle check", which is a maintenance for confirming whether or not the nozzles in the inkjet heads 21 for discharging the UV ink 21a are operating normal, and also related to the "nozzle check", of which appropriate performing timing is "before shaping". The "nozzle check" is a maintenance for confirming failures in the nozzles of the inkjet heads 21 by operating the 3D printer 20 to print a test pattern, which is an image by which the failures in the nozzles of the inkjet heads 21 can be confirmed, on a recording medium such as a paper, and having a user check the test pattern printed on the recording medium. The "nozzle check" related information display area 152 includes a process start button 152a for causing the printer controller 40 to start processes for the "nozzle check", and a previous performing time display area 152b as a performing time display area for indicating a time when the "nozzle check" was previously performed. It should be noted that the process start button 152a can be operated at any timing irrelevant to the appropriate performing timing.

The maintenance-related information display area 150 includes a "head cleaning" related information display area 153 for indicating information related to "head cleaning", which is a maintenance for cleaning the inkjet heads 21 and of which appropriate performing timing is "once a day". The "head cleaning" includes, for example, wiping, which is a maintenance to wipe off contaminants on nozzle surfaces by a wiper that is not shown for cleaning the nozzle surfaces of the inkjet heads 21, where the nozzles are formed. Further, the "head cleaning" may include, for example, flushing, which is a maintenance that forces the nozzles of the inkjet heads 21 to eject the UV ink 21a for cleaning inside of the nozzles of the inkjet heads 21. Further, the "head cleaning" may include, for example, purging, which is a maintenance that sucks out the UV ink 21a from the nozzles of the inkjet heads 21 by covering the nozzle surfaces of the inkjet head 21 by a cap, and generating a negative pressure inside the cap for cleaning inside of the inkjet heads 21. The "head cleaning" related information display area 153 includes a process start button 153a and a previous performing time display area 153b, similar to the "nozzle check" related information display area 152.

The maintenance-related information display area 150 includes a "roller cleaning" related information display area 154 for indicating information related to "roller cleaning", which is a maintenance to clean the flattening roller 22, with an appropriate performing timing of "once a day". The "roller cleaning" is for example a maintenance to absorb contamination on the flattening roller 22 by a roller absorbing portion (not shown) for absorbing the contamination on the flattening roller 22, and to wipe off the contamination on the flattening roller 22 by a blade that is not shown. Similar to the "nozzle check" related information display area 152, the "roller cleaning" related information display area 154 includes a process start button 154a and a previous performing time display area 154b.

The maintenance-related information display area 150 includes a "wiper cleaning" related information display area 155 for indicating information related to "wiper cleaning", which is a maintenance to clean the aforementioned wiper with an appropriate performing timing of "once a week". Similar to the "nozzle check" related information display area 152, the "wiper cleaning" related information display area 155 includes a process start button 155a and a previous performing time display area 155b.

The maintenance-related information display area 150 includes a "roller absorbing portion cleaning" related information display area 156 for indicating information related to "roller absorbing portion cleaning", which is a maintenance to clean the aforementioned roller absorbing portion with an appropriate performing timing of "once a week". Similar to the "nozzle check" related information display area 152, the "roller absorbing portion cleaning" related information display area 156 includes a process start button 156a and a previous performing time display area 156b.

The maintenance-related information display area 150 includes a "blade exchange" related information display area 157 for indicating information related to "blade exchange", which is a maintenance to exchange the aforementioned blade, with an appropriate performing timing of "once every half year". Similar to the "nozzle check" related information display area 152, the "blade exchange" related information display area 157 includes a process start button 157a and a previous performing time display area 157b.

The maintenance-related information display area 150 includes a "test shaping" related information display area 158 for indicating information related to "test shaping", which is a maintenance to confirm malfunctions in the shaping of three-dimensional objects by the 3D printer 20, in which the 3D printer 20 is caused to shape a three-dimensional object based on a test shaping data for confirming whether or not the 3D printer 20 can normally shape the three-dimensional object, and the user checks the shaped three-dimensional object, with an appropriate performing timing that is none of "before shaping", "once a day", "once a week" and "once every half year". Similar to the "nozzle check" related information display area 152, the "test shaping" related information display area 158 includes a process start button 158a and a previous performing time display area 158b.

The maintenance-related information display area 150 includes a "discarded ink tank replacement" related information display area 159 for indicating information related to "discarded ink tank replacement", which is a maintenance to replace the discarded ink tank 27, with an appropriate performing timing that is none of "before shaping", "once a day", "once a week" and "once every half year". Similar to the "nozzle check" related information display area 152, the "discarded ink tank replacement" related information display area 159 includes a process start button 159a and a previous performing time display area 159b.

The maintenance-related information display area 150 includes a help manual button 160a for displaying a help manual of the 3D printer 20 on the display device 42, a log file creating button 160b for creating a log file indicating a history of the maintenances, and a software backup button 160c for backing up the printer control program 44a.

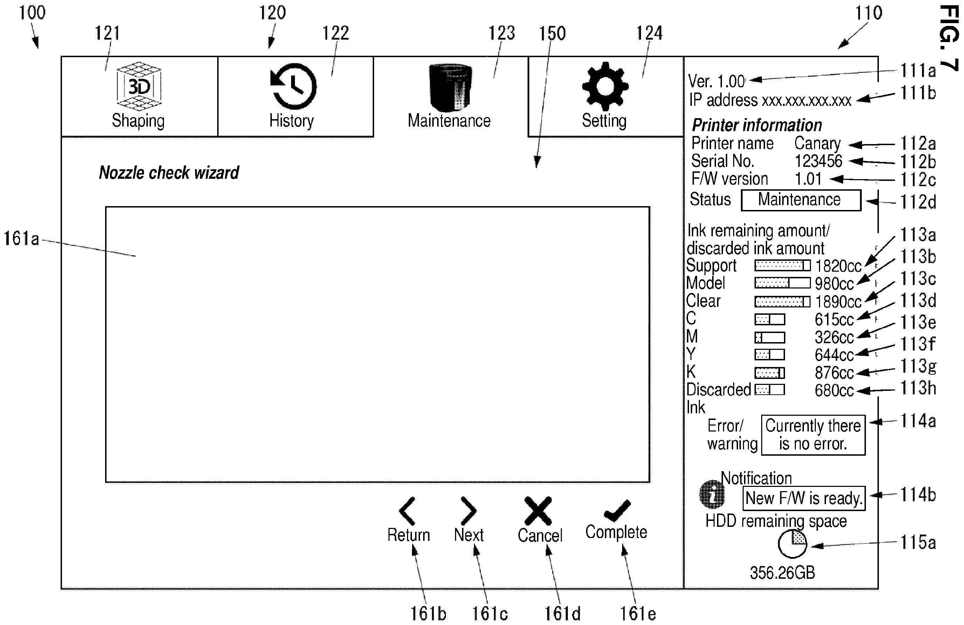

FIG. 7 is a diagram showing an example of the GUI 100 in a case where a wizard display area 161a is being displayed on the maintenance-related information display area 150.

When a maintenance start button such as the process start button 152a is operated, the controlling section 45 executing the printer control program 44a starts a process for the maintenance corresponding to the operated process start button. Here, some of the maintenances may need work by the user. When the process for the maintenance that needs the work by the user is started, the display controlling section 45b displays the wizard display area 161a shown in FIG. 7 in the maintenance-related information display area 150 for indicating work procedure in sequence for the user by images and sentences.

As shown in FIG. 7, when the maintenance-related information display area 150 includes the wizard display area 161a, it includes a "return" button 161b for displaying a procedure before the current procedure in the wizard display area 161 a, a "next" button 161c for displaying a procedure succeeding the current procedure in the wizard display area 161 a, and a cancel button 161d and a completion button 161e for deleting the wizard display area 161a from the maintenance-related information display area 150 to return the maintenance-related information display area 150 to the display in FIG. 6. The "return" button 161b cannot be operated by being grayed out when the first procedure in the targeted maintenance is being displayed in the wizard display area 161 a. The "next" button 161c cannot be operated by being grayed out when the last procedure in the targeted maintenance is being displayed in the wizard display area 161 a. The completion button 161e cannot be operated by being grayed out except during when the last procedure in the targeted maintenance is being displayed in the wizard display area 161a. When the completion button 161e is pressed, the controlling section 45 executing the printer control program 44a stores the time when the targeted maintenance is performed in the storing section 44 or the like.

Next, an operation of the printer controller 40 for a case of prompting the user to perform a maintenance will be described.

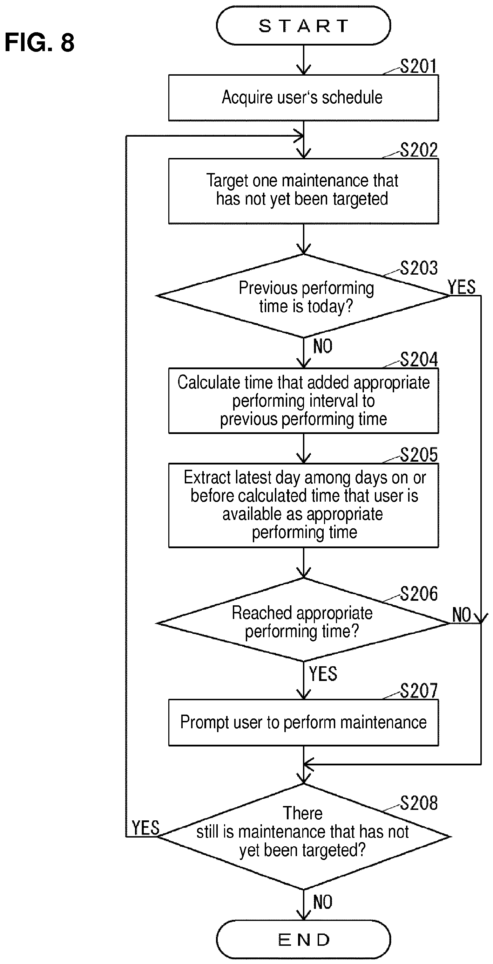

The controlling section 45 executing the printer control program 44a executes an operation shown in FIG. 8 at a specific timing, such as once every hour.

FIG. 8 is a flow chart of the operation of the printer controller 40 for the case of prompting the user to perform a maintenance.

As shown in FIG. 8, the user schedule acquiring section 45c acquires a schedule of the user (S201). For example, the user schedule acquiring section 45c can acquire the schedule of the user from the storing section 44 by receiving the user's schedule in advance and storing it in the storing section 44.

The maintenance prompting section 45a targets one of the maintenances, among "head cleaning", "roller cleaning", "wiper cleaning", "roller absorbing portion cleaning", and "blade exchange", which has not yet been performed in the operation shown in FIG. 8 as currently taking place (S202).

Then, the maintenance prompting section 45a determines whether or not the previous performing time of the targeted maintenance was today (S203).

When determining that the previous performing time of the targeted maintenance was not today in S203, the maintenance prompting section 45a calculates a time obtained by adding the appropriate performing interval of the targeted maintenance to the previous performing time of the targeted maintenance (S204).

Next, the maintenance prompting section 45a extracts the latest day on which the user can perform the targeted maintenance, which may be on or before the day indicated by the time calculated in S204, as the appropriate performing time according to the schedule acquired in S201 (S205). Here, the "day on which the user can perform the targeted maintenance" means a day when the user is at work in a company where the 3D printer 20 is installed, for example. However, despite being a day on which the user is at work in the company where the 3D printer 20 is installed, if a time allowing the user to perform the targeted maintenance cannot be secured due to other schedules being set for the whole day or the like, this day will be excluded from the "day on which the user can perform the targeted maintenance".

After the process of S205, the maintenance prompting section 45a determines whether or not the appropriate performing time extracted in S205 has come (S206). That is, the maintenance prompting section 45a determines that the appropriate performing time has come if the appropriate performing time extracted in S205 is on or before today.

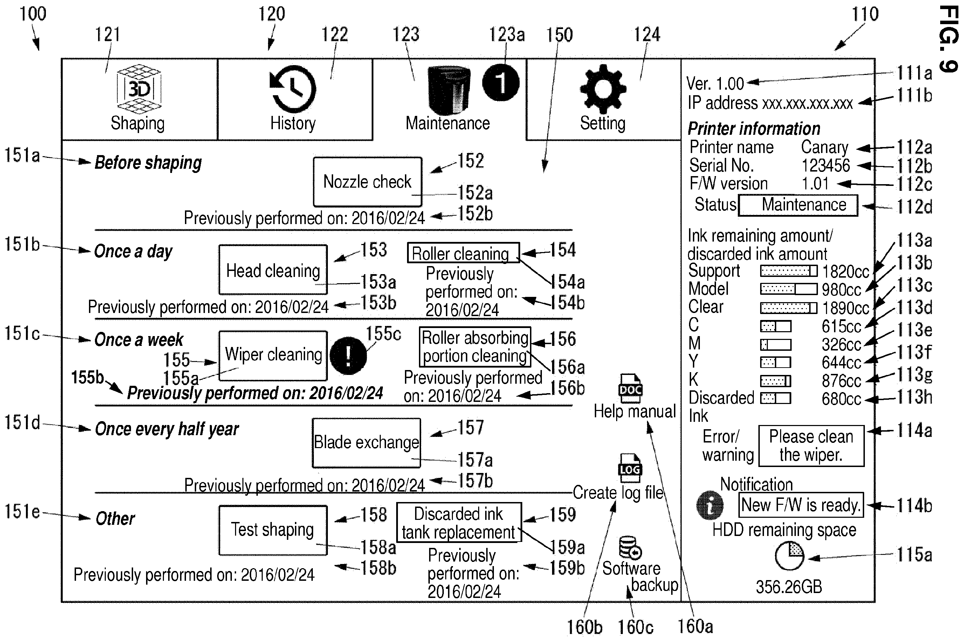

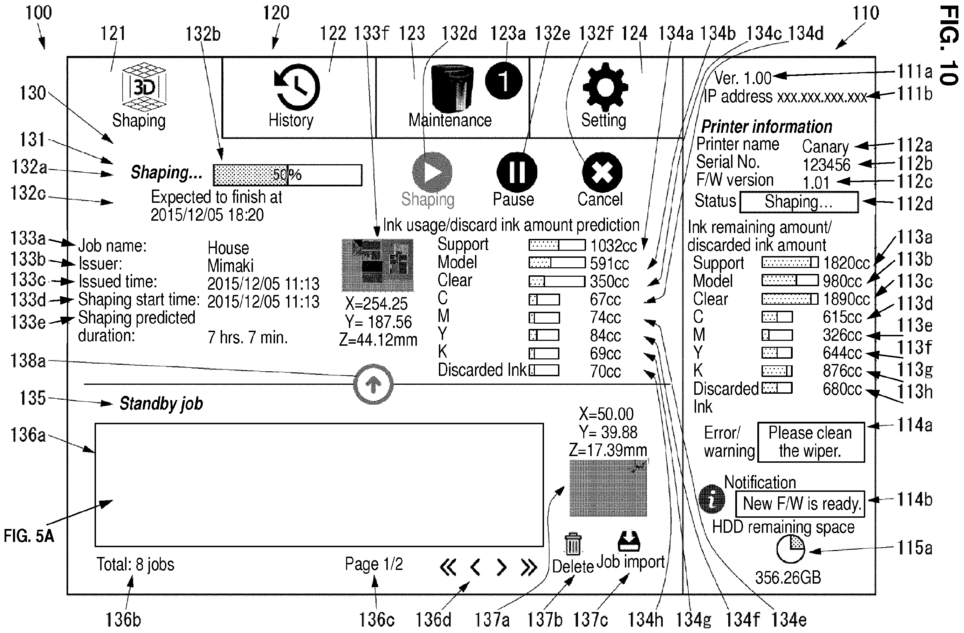

In determining that the appropriate performing time has come in S206, the maintenance prompting section 45a prompts the user to perform the targeted maintenance (S207). For example, if the targeted maintenance is "wiper cleaning", the maintenance prompting section 45a prompts the user to perform "wiper cleaning" by instructing the display controlling section 45b to cause the display device 42 to display a warning message in the error/warning display area 114a, to display a warning image 123a in the maintenance tab 123, to perform emphasized display in the previous performing time display area 155b, such as to change color, font, or size of the letters, and to display a warning image 155c on the "wiper cleaning" related information display area 155 as shown in FIG. 9. It should be noted that, the warning message in the error/warning display area 114a and the warning image 123 a in the maintenance tab 123 are displayed even if the display contents of the display switchable area 120 is the job display area 130, the history display area, or the setting display area as shown in FIG. 10. The warning message in the error/warning display area 114a and the warning image 155c in the "wiper cleaning" related information display area 155 disappear when "wiper cleaning" is performed. The emphasized display in the previous performing time display area 155b also returns to its normal display when "wiper cleaning" is performed. The warning image 123a indicates a total number of maintenances prompted by the operation shown in FIG. 8 as currently taking place, and its number is decremented by one each time a relevant maintenance is performed, and disappears when all of the relevant maintenances are performed.

As shown in FIG. 8, when the maintenance prompting section 45a determines that the previous performing time of the targeted maintenance is today in S203, determines that the appropriate performing time has not yet to come in S206, or executes the process of S207, it determines whether or not there is a maintenance, among "head cleaning", "roller cleaning", "wiper cleaning", "roller absorbing portion cleaning", and "blade exchange", which has not yet been targeted in the operation shown in FIG. 8 as currently taking place (S208).

When determining in S208 that there still is a maintenance that has not yet been targeted in the operation shown in FIG. 8 as currently taking place, the maintenance prompting section 45a executes the process of S202.

When determining in S208 that there is no maintenance that has not yet been targeted in the operation shown in FIG. 8 as currently taking place, the maintenance prompting section 45a completes the operation shown in FIG. 8.

As described above, the printer controller 40 displays the appropriate performing intervals for the maintenances of the 3D printer 20 and the previous performing times of the maintenances on the display device 42, it can specifically make the user grasp the appropriate performing times of the maintenances. Thus, the printer controller 40 can increase the possibility by which the maintenances of the 3D printer 20 are performed appropriately by the user.

It should be noted that, in this embodiment regarding "wiper cleaning", the maintenance-related information display area 150 displays "once a week" as the appropriate performing interval in the "once a week" display area 151c and the previous performing time is displayed in the previous performing time display area 155b. However, the maintenance-related information display area 150 may display, regarding "wiper cleaning", the time obtained by adding the appropriate performing interval to the previous performing time instead of the previous performing time, or in addition to the previous performing time. Although the above explanation was given regarding "wiper cleaning", the same applies to the maintenances other than "wiper cleaning", such as "head cleaning", "roller cleaning", "roller absorbing portion cleaning", "blade exchange", and the like.

The printer controller 40 prompts the user to perform maintenance (S207) when the appropriate performing time when the user can perform the maintenance has come (YES in S206), which is on or before the time obtained by adding the appropriate performing interval of the maintenance to the previous performing time of the maintenance of the 3D printer 20, and as such, the possibility by which the maintenance is performed by the user before elapsing the time obtained by adding the appropriate performing interval of the maintenance to the previous performing time of the maintenance can be increased. For example, even in a case where the time obtained by adding the appropriate performing interval of the maintenance to the previous performing time of the maintenance is to come during the user's long-term holiday, the printer controller 40 can make the user perform the maintenance before the long-term holiday, and as such, an undesirable situation for the 3D printer 20 in which the maintenances of the 3D printer 20 are not performed over a long period of time exceeding their appropriate performing intervals can be suppressed from occurring.

The appropriate performing timings of the maintenances shown in FIG. 6 are mere examples. The maintenance-related information display area 150 may include appropriate performing timings other than those shown in FIG. 6, such as "once every three months". It should be noted that the combinations of the maintenances and the appropriate performing timings shown in FIG. 6 are mere examples. Each of the maintenances can have a suitable (e.g. predetermined) timing set as its appropriate performing timing.

The maintenances shown in FIG. 6 are mere examples. Various other maintenances may be included. The maintenance-related information display area 150 may for example indicate information related to a maintenance other than the maintenances shown in FIG. 6, such as "blade cleaning", which is a maintenance for cleaning the aforementioned blade.

It should be noted that the maintenances displayed in the maintenance-related information display area 150 are maintenances that can be carried out by any ordinary person. However, even for maintenances that can be performed by a specific person that is not an ordinary user, such as a service person of a providing company of the 3D printer 20, the maintenance prompting section 45a may manage the previous performing time and the appropriate performing interval thereof, similar to the maintenances that can be performed by the ordinary person, and may prompt the specific person such as the service person by displaying a warning message in the error/warning display area 114a to perform the maintenance when the appropriate performing time therefor has come.

It should be noted that, in the above, the maintenance prompting section 45a processes the previous performing times and the appropriate performing intervals in units of days. However, the maintenance prompting section 45a may process the previous performing times and the appropriate performing intervals in units that are smaller than the day unit, such as by units of hours. It should be noted that, when the maintenance prompting section 45 a is to process the previous performing times by a time unit smaller than the day unit, the display controlling section 45b may display the previous performing times by the time unit smaller than the day unit.

The three-dimensional shaping system 10 in this embodiment causes the GUI 100 to be displayed on the display device 42 of the printer controller 40. However, the three-dimensional shaping system 10 may cause a GUI similar to the GUI 100 to be displayed in the display device 32 of the 3D printer 20. The GUI displayed in the display device 32 of the 3D printer 20 is operated for example by the operating unit 31.

The three-dimensional shaping system 10 in this embodiment is provided with the 3D printer 20 and the printer controller 40. However, the three-dimensional shaping system 10 may not be provided with the printer controller 40 if the 3D printer 20 is provided with functions of the printer controller 40 as aforementioned.

In this embodiment, a three-dimensional shaping system, that is, a three-dimensional printing system has been described. However, the present disclosure may be applied to a two-dimensional printing system as well.

## Claims

1. A maintenance managing program comprising instructions for causing a computer to realize:
a maintenance prompting section (45a) configured to prompt a user to perform a maintenance in a case where an appropriate performing time, which is an appropriate time for performing the maintenance of an inkjet printer (20), has come; and
a display controlling section (45b) configured to control a display of a display device (32, 42),
wherein the display controlling section (45b) is configured to display on the display device (32, 42):
an appropriate performing interval of the maintenance, and
at least one of a previous performing time of the maintenance and a time obtained by adding the performing interval to the previous performing time.

2. The maintenance managing program according to claim 1, further comprising instructions for causing the computer to realize:
a user schedule acquiring section (45c) configured to acquire a schedule of the user,
wherein the maintenance prompting section (45a) uses a specific time as the appropriate performing time, the specific time being on or before the time obtained by adding the performing interval to the previous performing time and being a time when the user can perform the maintenance according to the schedule acquired by the user schedule acquiring section (45c).

3. A maintenance managing program comprising instructions for causing a computer to realize:
a maintenance prompting section (45a) configured to prompt a user to perform a maintenance in a case where an appropriate performing time as an appropriate performing time of the maintenance of an inkjet printer (20) has come; and
a user schedule acquiring section (45c) configured to acquire a schedule of the user,
wherein the maintenance prompting section (45a) uses a specific time as the appropriate performing time, the specific time being on or before a time obtained by adding an appropriate performing interval of the maintenance to a previous performing time and being a time when the user can perform the maintenance according to the schedule acquired by the user schedule acquiring section (45c).

4. A maintenance managing device comprising:
a maintenance prompting section (45a) configured to prompt a user to perform a maintenance in a case where an appropriate performing time, which is an appropriate time for performing the maintenance of an inkjet printer (20), has come; and
a display controlling section (45b) configured to control a display of a display device (32, 42),
wherein the display controlling section (45b) is configured to display on the display device (32, 42):
an appropriate performing interval of the maintenance, and
at least one of a previous performing time of the maintenance and a time obtained by adding the performing interval to the previous performing time.

5. A maintenance managing device comprising:
a maintenance prompting section (45a) configured to prompt a user to perform a maintenance in a case where an appropriate performing time as an appropriate performing time of the maintenance of an inkjet printer (20) has come; and
a user schedule acquiring section (45c) configured to acquire a schedule of the user,
wherein the maintenance prompting section (45a) uses a specific time as the appropriate performing time, the specific time being on or before a time obtained by adding an appropriate performing interval of the maintenance to a previous performing time and being a time when the user can perform the maintenance according to the schedule acquired by the user schedule acquiring section (45c).

6. A maintenance managing method comprising:
a maintenance prompting step of prompting a user to perform a maintenance in a case where an appropriate performing time, which is an appropriate time for performing the maintenance of an inkjet printer (20), has come; and
a display controlling step of controlling a display of a display device (32, 42),
wherein the display controlling step is a step of displaying on the display device (32, 42):
an appropriate performing interval of the maintenance, and
at least one of a previous performing time of the maintenance and a time obtained by adding the performing interval to the previous performing time.

7. A maintenance managing method comprising:
a maintenance prompting step of prompting a user to perform a maintenance in a case where an appropriate performing time as an appropriate performing time of the maintenance of an inkjet printer (20) has come; and
a user schedule acquiring step of acquiring a schedule of the user,
wherein the maintenance prompting step is a step which uses a specific time as the appropriate performing time, the specific time being on or before a time obtained by adding an appropriate performing interval of the maintenance to a previous performing time and being a time when the user can perform the maintenance according to the schedule acquired by the user schedule acquiring step.

8. A graphical user interface (GUI) comprising:
a performing interval display area (151b, 151c, 1521d) for indicating an appropriate performing interval of a maintenance of an inkjet printer (20); and
a performing time display area (153b, 154b, 155b, 156b and 157b) for displaying at least one of a previous performing time of the maintenance and a time obtained by adding the performing interval to the previous performing time.
